# EUROPÄISCHE PATENTSCHRIFT

(11) **EP 1 354 969 B1**
(45) Veröffentlichungstag und Bekanntmachung des Hinweises auf die Patenterteilung: **30.11.2005**
(21) Anmeldenummer: 03007737.4
(22) Anmeldetag: 04.04.2003
(51) Int. Cl.: C22B 7/04, C21B 3/06

(54) **Verfahren zur Konditionierung von flüssiger Hochofenschlacke**
Method for conditioning of a liquid blast furnace slag
Procédé de conditionnement de laitier liquide de haut-fourneau

(30) Priorität: 10.04.2002 DE 10215594
(43) Veröffentlichungstag der Anmeldung: 22.10.2003
(73) Patentinhaber: ThyssenKrupp Stahl AG, 47166 Duisburg (DE)
(72) Erfinder: Lorch, Ronald, Dipl.-Ing., 47445 Moers (DE); Kühn, Michael, Dr.-Ing., 47799 Krefeld (DE); Mudersbach, Dirk, Dipl.-Ing., 47638 Straelen (DE); Geiseler, Jürgen, Prof. Dr.-Ing., 47918 Tönisvorst (DE)
(74) Vertreter: Cohausz & Florack

(56) Entgegenhaltungen:
- AT-B- 407 644
- DE-A- 2 307 237
- GB-A- 2 025 390

## Beschreibung

Die Erfindung betrifft ein Verfahren zur Konditionierung von flüssiger Hochofenschlacke, bei dem der flüssigen Hochofenschlacke nach ihrem Abstich aus dem Hochofen und vor ihrer Weiterverarbeitung ein Material zugegeben wird, welches mindestens einen Stoff aus der Gruppe CaO, MgO, Al₂O₃ enthält

Hochofenschlacke entsteht im Hochofenprozess. Ihre Zusammensetzung wird durch die Einsatzstoffe und den Hochofenprozess bestimmt. Die Einsatzstoffe bestehen insbesondere aus den Erzen, den Zuschlägen, dem Koks, die den Hochofenmöller ergeben, und ggf. den über die Blasformen eingebrachten Reduktionsmitteln und Rohstoffen.

Der Hochofenmöller wird nach energetischen und produktspezifischen Gesichtspunkten, insbesondere hinsichtlich der Qualität der zu erzeugenden Produkte Roheisen, Gichtgas und Schlacke zusammengesetzt. Durch die Prozess- und Temperaturführung im Hochofen wird die Zusammensetzung dieser Produkte gezielt eingestellt.

Die Hochofenschlacke hat im Vergleich zu einer z.B. Stahlwerksschlacke eine niedrige Basizität (berechnet aus dem Verhältnis von CaO/SiO₂) von 0,95 bis 1,15. Im Hochofen hat sie die Aufgabe, nicht reduzierbare Bestandteile des Möllers aufzunehmen und eine möglichst effektive Entschwefelung sicherzustellen. Daraus ergeben sich als Hauptbestandteile der Hochofenschlacke CaO, SiO₂, MgO, Al₂O₃.

Die Hochofenschlacke wird flüssig aus dem Hochofen abgestochen und durch spezielle mechanische Vorrichtungen (Fuchs) vom Roheisen getrennt.

Nach dem Abstich wird die flüssige Hochofenschlacke zum einen in Beete abgegossen, in denen sie gezielt langsam an der Luft zu einer kristallinen Hochofenstückschlacke abgekühlt und durch das Übereinandergießen verschiedener Lagen getempert wird. Zum anderen wird die flüssige Hochofenschlacke mit einem Wasserüberschuss abgeschreckt, so dass sie in kleine Partikel (>0 mm bis 5 mm) aufgeteilt wird und glasig erstarrt. Diese glasig erstarrte Hochofenschlacke wird als Hüttensand bezeichnet. Darüber hinaus ist die Verarbeitung von flüssiger Hochofenschlacke zu weiteren Produkten bekannt, u.a. Hüttenbims, Hochofenschlackenpellets, Hüttenwolle oder gegossenen Pflastersteinen.

Die Qualität der Produkte aus Hochofenschlacke wird durch ihre chemische Zusammensetzung und die Wärmebehandlungskonditionen bestimmt. Ein wesentliches qualitätsbeeinflussendes Merkmal der Hochofenstückschlacke ist darüber hinaus ihre Porosität. Diese kann u. a. durch geeignete Zuschlagstoffe zur flüssigen Hochofenschlacke beeinflusst werden. Diese Zuschlagstoffe haben die Aufgabe, die Freisetzung der in der flüssigen Schlacke gelösten Gase zu regulieren. Zum einen wird die Freisetzung der Gase unterbunden oder zumindest begrenzt und zum anderen wird sie intensiviert, damit ein Großteil der bei der Abkühlung freigesetzten Gase vor der Erstarrung aus der Schlacke entweichen kann. Wird durch diese Zusätze die Viskosität der Hochofenschlacke derart beeinflusst, dass eine Viskositätserniedrigung erzielt wird, so wird das Austreten der Gase während der Erstarrung erleichtert und ein Einschluss von Gasblasen verhindert.

Neben dem Glasgehalt ist die chemische Zusammensetzung qualitätsbestimmend für den Hüttensand. Höhere Basizitäten und Al₂O₃-Gehalte des Hüttensands steigern im allgemeinen die Hydraulizität des Hüttensands und des daraus hergestellten Zements. Auch die Viskosität der flüssigen Hochofenschlacke beeinflusst das Granulierergebnis und damit die Qualität des erzeugten Hüttensands. Je geringer die Viskosität der Schlacke ist, desto besser sind im allgemeinen das Granulierergebnis und die Hydraulizität.

Die Güte eines Hüttensandes kann anhand seines Verhaltens als Hauptbestandteil im Zement überprüft werden. Hierzu werden Hochofenzemente als Mischungen aus Hüttensand, Klinker und einem Sulfatträger in gemahlener Form hergestellt. Mit dem Hochofenzement werden Mörtel hergestellt, die mit Wasser angemacht werden und erhärten. An den erhärteten Mörteln wird die Festigkeitsentwicklung in Abhängigkeit von der Zeit ermittelt und mit den Anforderungen der Norm verglichen.

Werden die Basizität und/oder der Al₂O₃-Gehalt der Schlacke gezielt angehoben, so können im allgemeinen sowohl höhere Anfangsfestigkeiten als auch Endfestigkeiten mit den aus diesen Schlacken hergestellten Hüttensanden erzielt werden.

Um den an die Verwendbarkeit von Zementgrundstoffen gestellten Anforderungen gerecht zu werden, ist beispielsweise in der WO 01/55457 A1 ein Verfahren zum Herstellen von puzzolanischen Zusatzstoffen für die Zementindustrie vorgeschlagen worden, bei dem unter Verwendung eines reduzierenden Metallbades bei basischen oxidischen Stahlwerksschlacken die Basizität (CaO/SiO₂) der flüssigen Stahlwerksschlacken durch Zusatz von sauren Korrekturstoffen wie Quarzsand vor der Reduktion auf einen Wert unterhalb der Basizität der Zielschlacke eingestellt wird. Durch ein solches Verfahren sollen ohne Auftreten von Schaumschlacke die zementtechnologischen Eigenschaften der Stahlwerkschlacke verbessert werden. Gleichzeitig soll die Behandlungszeit basisch-oxidischer Stahlwerkschlacken herabgesetzt und schließlich eine sichere und rasche Reduktion von Metalloxiden bewirkt werden.

In vergleichbarer Weise werden gemäß dem aus der WO 01/55459 A1 bekannten Verfahren Stahlwerksschlacken oder Schlackengemische auf einem Eisenbad behandelt. Dabei wird nach dem Aufbringen flüssiger SiO₂-haltiger Korrekturstoffe wie etwa Hochofenschlacke das Stahlbad aufgekohlt und zur Erzeugung von Wärme der Kohlenstoff anschließend aus dem Eisenbad mit Sauerstoff entfernt.

Um eine Schlacke zu erhalten, welche ein zementtechnologisch brauchbares Produkt darstellen soll, ist es gemäß den bekannten Verfahren demnach erforderlich, den metallurgischen Prozess der Schlacke-Metall-Reaktion direkt zu beeinflussen. Dies birgt die Gefahr, dass infolge der Schlackenbehandlung der metallurgische Erzeugungsprozess nicht optimal durchgeführt werden kann.

Neben dem voranstehend erläuterten Stand der Technik ist aus der AT 407 644 B ein Verfahren zur Schlackekonditionierung der eingangs genannten Art bekannt, bei dem die Schlacke mindestens eines Abstichs des Hochofens in flüssigem Zustand in einem Schlackenkonditioniergefäß mit weiteren Reststoffen zusammengeführt und behandelt wird, indem nacheinander verschiedene Stoffe zum Ausreagieren der im Schlackengefäß enthaltenen Stoffe und zum Reduzieren des in den Reststoffen enthaltenen Eisens in das Schlackengefäß eingebracht werden. Die so erzeugte Schmelze wird dann durch Einblasen von Spülgas gerührt, auf eine Haltetemperatur aufgeheizt, bei der sie dann für eine bestimmte Zeit gehalten wird, bevor der Schlackenschmelze dann weitere Zusatzstoffe zugegeben werden, um die gewünschte Zusammensetzung der Schmelze einzustellen.

Bei praktischen Versuche der Umsetzung hat sich das bekannte Verfahren als unwirtschaftlich erwiesen. Insbesondere zeigte sich, dass die Behandlung im Schmelzenkonditioniergefäß erhebliche Betriebskosten nach sich zog und nur durch hohen technischen Aufwand verwirklicht werden konnte.

Des Weiteren ist aus der DE-OS 23 07 237 ein Verfahren zur Behandlung von metallurgischen Schlacken bekannt, die insbesondere mehr oder weniger feinverteiltes Metall und/oder relativ hohe Gehalte, insbesondere mehr als 50 %, vorzugsweise mehr als 80 %, an Oxiden von Metallen und/oder Silizium, insbesondere von Fe, Mn, Cr, Ni, Si, V, Mo, W, enthalten. Mittels Reduktionsmitteln in festem oder flüssigem Zustand werden die Schlacken einer Reduktionsbehandlung unterworfen. Dabei wird durch gesteuerte Wärmezufuhr ein bestimmter Viskositätsgrad der Schlacken derart eingestellt, dass die Reduktionsbedingungen aufrecht erhalten bleiben, so dass die in den Schlacken enthaltenen und daraus ausreduzierten Metalle sedimentieren und gleichzeitig eine optimale, ökonomische und industrielle Verwertbarkeit der Rückstände erreicht wird. Die gesteuerte Wärmezufuhr kann dabei mittels elektrischer Energie erfolgen. Sie kann jedoch auch exotherm durch das Reduktionsmittel vorzugsweise mittels Verbrennung von Kohleträgern mit Sauerstoff erfolgen. Dabei findet die Schlackenbehandlung jeweils im Schlackenbehälter statt mit der Folge, dass die Temperatur der zu behandelnden Schlacke bereits relativ weit abgesunken ist und große Mengen an exotherm reagierenden Stoffen zugeführt werden müssen, um die gewünschte Erwärmung zu erreichen.

Schließlich ist aus der GB 2 025 390 A, ein Verfahren bekannt, bei dem zur Schlackekonditionierung sauerstoffreiches Gas oder Sauerstoff injiziert wird, um die Temperatur der Schlacke zu erhöhen. Dies findet jedoch erst statt, nachdem der am Ausgang eines Hochofens anliegenden Schlacke Additive zugeschlagen worden sind und die Schlacke zu einem Drehofen geleitet worden ist. Die auf diese Weise behandelte Schlacke weist eine Zusammensetzung auf, die sie besonders zur Herstellung von Portland-Zement geeignet macht.

Ausgehend von dem voranstehend beschriebenen Stand der Technik bestand die Aufgabe der Erfindung darin, ein Verfahren zu schaffen, welches es mit geringem technischen Aufwand ermöglicht, die Qualität von flüssiger Hochofenschlacke auf das entsprechende Hochofenschlackenprodukt optimal einzustellen.

Zur Lösung dieser Aufgabe schlägt die Erfindung vor, der flüssigen Hochofenschlacke vor dem Fuchs, im Fuchs oder nach dem Fuchs in der Schlackenrinne zusätzlich mindestens einen exotherm reagierenden Stoff zuzusetzen.

Gemäß der Erfindung erfolgt die Zugabe von Zuschlagstoffen außerhalb des Hochofens in die flüssige Schlacke, so dass jegliche Beeinflussung des Roheisens im Hochofen auszuschließen ist. Ziel der Zugabe von CaO, MgO und/oder Al₂O₃ ist es, die Qualität der aus der flüssigen Hochofenschlacke hergestellten Produkte, Hochofenstückschlacke, Hüttensand etc., zu verbessern.

Dies kann nur dann über eine Änderung der Möllerzusammensetzung erreicht werden, wenn eine Veränderung der Roheisenqualität und des Hochofenprozesses in Kauf genommen wird. Da dies im allgemeinen vermieden werden muss, ist beim erfindungsgemäßen Verfahren die Zugabe in die flüssige Hochofenschlacke außerhalb des Hochofens vorgesehen. Eine solche Zugabe scheiterte bisher jedoch stets, weil die flüssige Schlacke bei Zugabe der Zusätze erstarrte.

Bei erfindungsgemäßer Vorgehensweise wird die Hochofenschlacke am Hochofen flüssig zusammen mit dem Roheisen abgestochen. Dabei ist die Schlacke in der Regel etwa 30 - 40 K wärmer als das Roheisen. Dennoch ist die Wärmekapazität der Schlacke sehr begrenzt, so dass es schwierig ist, kalte Stoffe aufzuschmelzen und zu lösen. Müssen zur Erzielung des erfindungsgemäßen Effekts größere Stoffmengen in die Schlacke eingebracht werden, so wird dabei die zur Verfügung stehende Wärme in der Schlacke in der Regel bei weitem überschritten.

Es war daher überraschend, dass nachgewiesen werden konnte, dass beispielsweise bei Zusatz von Calciumcarbid zur flüssigen Schlacke, die Schlacke nicht erstarrte. Die Temperatur der flüssigen Schlacke konnte sogar noch erhöht werden, so dass weitere Zusatzstoffe zur Verbesserung der Schlackenqualität von der flüssigen Schlacke aufgelöst werden.

Es ist zwar grundsätzlich bekannt, dass Calciumcarbid mit Sauerstoff unter Freisetzung von Wärme reagiert. Da die flüssige Hochofenschlacke jedoch praktisch keinen Sauerstoff enthält, konnte nicht erwartet werden, dass die Verwendung von Calciumcarbid eine derartige Wärmemenge freisetzt, die sogar zur Auflösung weitere Zusatzstoffe ausreicht.

Aufgrund dieses überraschenden Ergebnisses wurden weitere Versuche durchgeführt, bei denen nicht Calciumcarbid, sondern Kalk (CaO) und Kohlenstoff (C) oder kohlenstoffhaltige Materialien verwendet wurden. Auch derartige Stoffe sind überraschenderweise geeignet, die Zusammensetzung der flüssigen Schlacke insbesondere bezüglich ihrer Basizität und/oder ihres Tonerdegehalts zu erhöhen, ohne dass die Schlacke erstarrt und ein Auflösen der Zusätze verhindert wird.

Deshalb werden gemäß der Erfindung neben CaO, MgO und / oder Al₂O₃ Stoffe der Schlacke zugegeben, die in der Schlacke exotherm, entweder mit der Schlacke selbst oder aber durch die Zugabe separater Reaktionspartner, reagieren. Damit kann über chemische Reaktionen die notwendige Lösungswärme in die Schmelze eingebracht werden, um die ggf. erforderliche Menge an Zuschlagstoffen aufzulösen.

Als Zuschlagstoffe kommen solche Stoffe in Frage, die einen wesentlichen Beitrag zur Qualitätssteigerung beisteuern; das sind im wesentlichen solche Stoffe, die einen hohen CaO-, MgO- und/oder Al₂O₃-Gehalt haben. Die Zuschlagstoffe liegen meist in oxidischer Form vor, zum Beispiel als Kalk, Dolomit oder als Reststoff aus der Aluminiumherstellung bzw. sekundärmetallurgische Schlacken aus der Behandlung von Stahl oder Roheisen. Solche Stoffe benötigen bei der Zugabe Wärme, um in der Schlacke gelöst werden zu können. Erfindungsgemäß soll daher den Stoffen bevorzugt eine Komponente zugemischt werden, die bei der Zugabe mit der umgebenden Luft oder separat zugegebenem Sauerstoff unter Wärmeabgabe reagiert. Die dabei entstehenden Reaktionsprodukte sollten qualitätsfördernd in bezug auf die Schlacke sein. Damit kommen im wesentlichen Stoffe in Frage, die als Reaktionsprodukt CaO, MgO oder Al₂O₃ ergeben.

Eine vorteilhaft Ausgestaltung der Erfindung ist dadurch gekennzeichnet, dass die Steigerung der CaO-, MgO-und/oder Al₂O₃-Gehalte der flüssigen Hochofenschlacke durch die Beimengung einer CaO-, MgO- und Al₂O₃-reichen sekundärmetallurgischen Schlacke erfolgt. Auf diese Weise kann die erfindungsgemäße Anreicherung der Schlacke vor der Granulation bzw. vor dem Abguss in das Schlackenbeet durch Verwendung von geeigneten, im Hüttenprozess zwangsläufig generierten Kreislaufstoffen besonders kostengünstig erreicht werden.

Als günstig hat es sich in diesem Zusammenhang erwiesen, wenn die zum Konditionieren verwendete sekundärmetallurgische Schlacke einen CaO-Gehalt von 35 Gew.-% - 60 Gew.-%, einen MgO-Gehalt von mindestens 10 Gew.-% und einen Al₂O₃- Anteil von mindestens 15 Gew.-% besitzt.

Bei einer Konditionierung sollte die erzielte Basizität (CaO+MgO/SiO₂) der erzeugten Schlacke stets über der Basizität der zu modifizierenden Hochofenschlacke liegen.

Gleichzeitig sollte eine Verminderung des Al₂O₃-Gehaltes vermieden werden.

Da große Mengen an Zusatzstoffen zur Einhaltung dieser Bedingungen den Wärmehaushalt der Schlacke belasten, so dass die Schlackentemperatur unter die Solidustemperatur absinken kann, muss der Schlacke Wärme zugeführt werden. In der Vergangenheit wurde versucht, die Schlacke durch Fremdbeheizung flüssig zu halten. Da die Schlacke sehr ungünstige Wärmeleitungseigenschaften hat, führt das Aufwärmen über eine Fremdbeheizung nur eingeschränkt zum Erfolg. Erfindungsgemäß wird die notwendige Wärme daher erforderlichenfalls über die chemische Reaktion der Einsatzstoffe selbst in die Schlacke eingebracht werden.

Hierzu wird gemäß einer vorteilhaften Variante der Erfindung ein Zusatz von geringen Anteilen CaC₂ vorgesehen. Dessen exotherme Reaktion mit Sauerstoff setzt hohe Wärmemengen frei, die zur Auflösung der anderen Zuschlagstoffe ausreichend sind. Vorteilhaft ist ebenfalls, dass bei der Reaktion von CaC₂ mit Sauerstoff CaO entsteht, das zur Qualitätssteigerung der Hochofenschlacke und der aus ihr hergestellten Endprodukte, insbesondere des aus ihr erzeugten Hüttensands, beiträgt.

Eine weitere Möglichkeit der Zufuhr von Wärme zu der Schlacke stellt die aluminothermische Reaktion dar. Auch bei der Oxidation von metallischem Aluminium mit Sauerstoff werden große Wärmemengen frei, die zur Lösung der Stoffe beitragen. Bei dieser Reaktion wird Aluminiumoxid, Al₂O₃, in der Schlacke gebildet, das den Erhärtungsprozess der Zemente, die mit solchen Hüttensanden hergestellt wurden, positiv beeinflusst. Daher erweist sich die Verwendung von Aluminium als Zusatzstoff, der eine exotherme Reaktion hervorruft, bei der Konditionierung von flüssigen Hochofenschlacken als besonders günstig.

Die Hochofenschlacken enthalten im allgemeinen keinen Sauerstoff, so dass in der Regel zum jeweils verwendeten Reaktanden zusätzlich Sauerstoff in die Schlacke eingebracht werden muss.

Die exotherm reagierenden Zuschlagstoffe beeinflussen die Eigenschaften der flüssigen Schlacke durch die Erniedrigung der Viskosität, die u.a. auch schon durch die Temperaturerhöhung in der Schlacke hervorgerufen wird. Dadurch wird der bei der langsamen Erstarrung zu Hochofenstückschlacke einsetzende Entgasungsprozess begünstigt und es entsteht ein dichtes Material.

Andererseits können auch solche Zusätze verwendet werden, welche die Viskosität erhöhen oder gasbildende Reaktionen hervorrufen, um eine poröse Erstarrung zu begünstigen, die für die Erzeugung von Hüttenbims und Hochofenschlackenpellets erforderlich ist.

Außerdem kann durch den Zusatz basizitätssenkender Stoffe eine Zusammensetzung eingestellt werden, die für die Erzeugung von Hüttenwolle günstig ist. Bei der vorgeschlagenen Behandlung der flüssigen Hochofenschlacke durch Zumischen von kalten, festen Stoffen ist die Auflösung der Zuschlagstoffe in der Schlacke von großer Bedeutung. Die Auflösung muss von der Zugabestelle des Zuschlagstoffes bis zur Übergabe in die Pfanne bzw. in die Granulation oder bis zur Hüttenbims- bzw. Verdüsungsanlage sicher abgeschlossen sein. Deshalb kommt auch der Korngröße der eingesetzten Zuschlagstoffe eine besondere Bedeutung zu. Die Gemische dürfen nicht zu fein sein, da dadurch die Gefahr einer übermäßigen Verstaubung gegeben ist, die zu Verlusten des Gemisches führt. Sie dürfen aber auch nicht zu grob sein, also eine zu geringe Gesamtoberfläche haben, da dann nicht mehr sichergestellt werden kann, dass die Zuschlagstoffe rechtzeitig aufgelöst werden.

Die Zuschlagstoffe können der flüssigen Schlacke unter Einhaltung geeigneter Korngrößen auf jegliche Art beigegeben werden. So ist es denkbar, sie durch Bedienpersonal manuell oder über eine Rutsche der Schlacke zuzuführen. In der Praxis lässt sich die erfindungsgemäße Wirkung jedoch besonders einfach dann realisieren, wenn die Injektion der Beimengungen mittels einer Lanze erfolgt. Der Zuschlagstoff kann dabei mittels eines Fördermediums, etwa eines Inertgases wie Stickstoff, oder auch Luft oder Sauerstoff zugeführt werden.

Dabei kann die Zufuhr von Luft oder Sauerstoff besonders vorteilhaft sein. Der beispielsweise über eine Lanze eingebrachte Sauerstoff unterstützt zusätzlich die Verbrennung des in der Schlacke bereits vorhandenen oder z. B. durch das Calciumcarbid eingebrachten Kohlenstoffs bzw. im Falle der aluminothermischen Reaktion die Oxidation des Aluminiums. Alternativ oder ergänzend ist es jedoch auch möglich, die Verbrennung des Kohlenstoffs und/oder Oxidation des Aluminiums durch separat in und/oder auf die Schlacke geblasenen Sauerstoff zusätzlich zu unterstützen und gleichzeitig die Zuschlagstoffe mit Hilfe eines Inertgases in die Schlacke zu injizieren.

Nachfolgend wird die Erfindung anhand von Ausführungsbeispielen näher erläutert. Es zeigen:

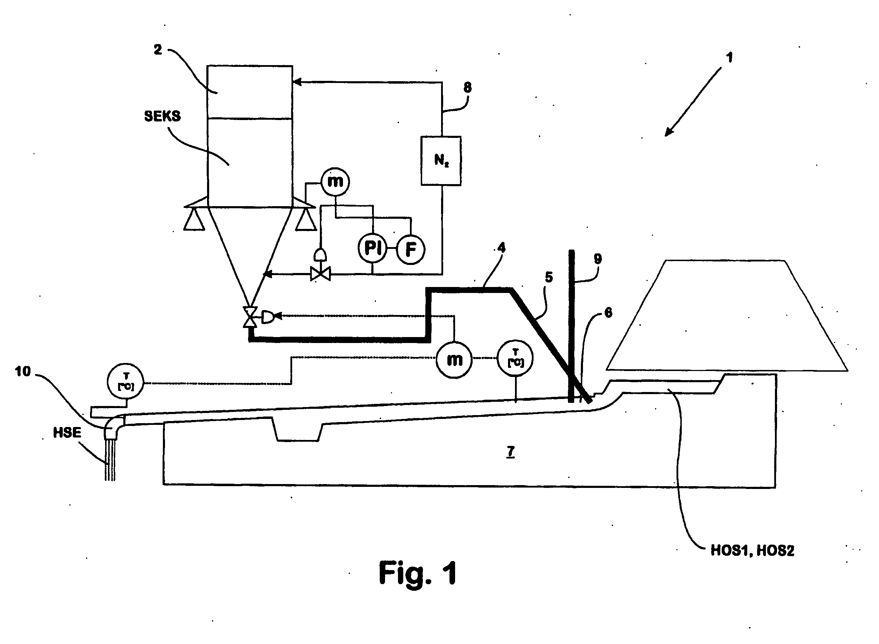

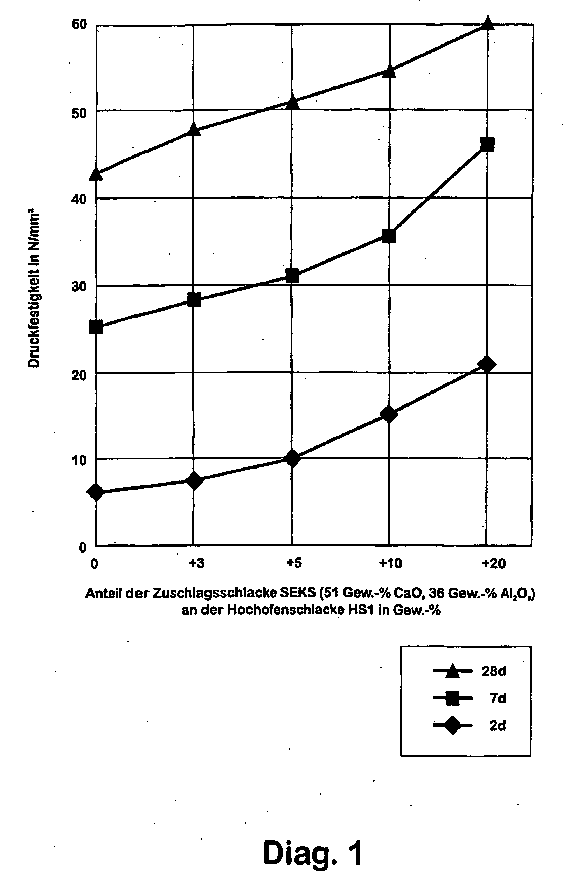

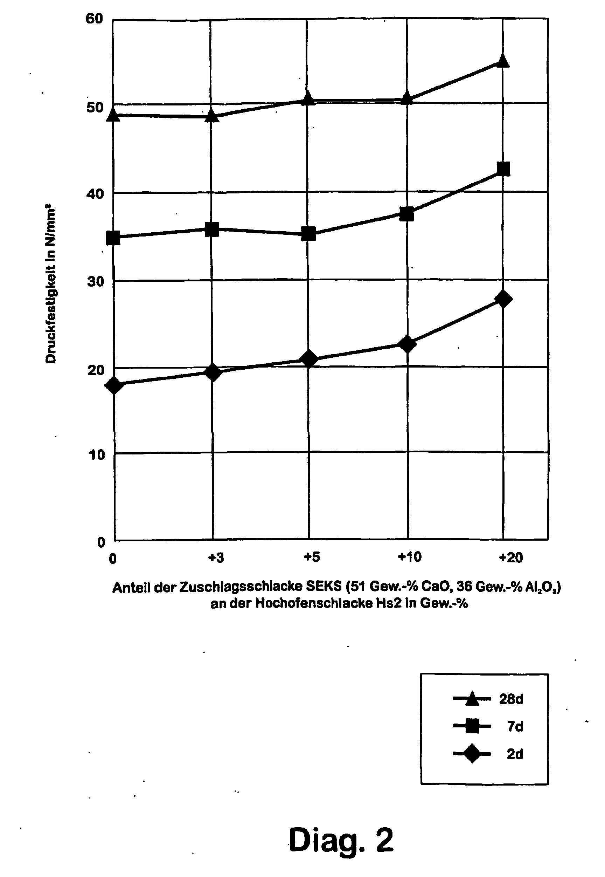

- Fig. 1: eine Anlage zur Dotierung einer flüssigen Hochofenschlacke,
- Diag. 1: die Druckfestigkeiten verschiedener Zementmischungen, aufgetragen über der Zugabemenge an sekundärmetallurgischer Schlacke SEKS zu einem Hüttensand A,
- Diag. 2: die Druckfestigkeiten verschiedener Zementmischungen, aufgetragen über der Zugabemenge an sekundärmetallurgischer Schlacke SEKS zu einem Hüttensand B.

Die in Fig. 1 dargestellte Anlage 1 weist einen Speicher 2 auf, der mit pulverförmig oder als Granulat vorliegendem Zuschlagstoff SEKS gefüllt ist. An den mittels einer Ventilsteuerung geregelten Auslas 3 des Speichers 2 ist über eine Verbindungsleitung 4 eine Lanze 5 angeschlossen, deren Mündung in die Reaktionszone 6 einer schmelzflüssigen Hochofenschlacke HOS1, HOS2 aufnehmenden Behandlungsgefäßes 7 (Schlackenrinne) gerichtet ist. Zum Fluidisieren des Zuschlagstoffs im Speicher 2 und für den Transport durch die Verbindungsleitung 4 und die Lanze 5 kann über Versorgungsleitungen 8 Stickstoff in den Speicher 2 geblasen werden.

Zusätzlich ist in die Reaktionszone 6 des Gefäßes 7 eine Sauerstofflanze 9 gerichtet, über die unabhängig von den Zuschlagstoffen Sauerstoff in bzw. auf die flüssige Hochofenschlacke HOS1, HOS2 geblasen werden kann.

Von der Reaktionszone 6 strömt die jeweilige Schlackenschmelze HOS1, HOS2 zu einer Übergabeeinrichtung 10, die entsprechend dem vorgesehenen Verarbeitungsweg der flüssigen Schlacke als Pfanne oder Granulationseinrichtung ausgebildet ist.

Zum Nachweis der durch die erfindungsgemäße Vorgehensweise erzielten Verbesserungen wurden zwei unterschiedlichen Hochofenschlacken HOS1 und HOS2 im flüssigen Zustand unterschiedliche Mengen einer sekundärmetallurgischen Schlacke SEKS zugemischt. Die Schlacke SEKS besaß dabei einen CaO-Gehalt von 51 Gew.-%, einen MgO-Gehalt von 11,5 Gew.-% und einen Al₂O₃-Gehalt von 36 Gew.-%.

Die jeweils den Hochofenschlacken HOS1, HOS2 zugegebenen Mengen der sekundärmetallurgischen Schlacke SEKS sind in der nachfolgenden Tabelle 1a für die Hochofenschlacke HOS1 und in der Tabelle 1b für die Hochofenschlacke HOS2 angegeben.

**Tabelle 1a**

| (Hochofenschlacke HOS1) | | | |
|---|---|---|---|
| Schlacke | Anteil der Zuschlagschlacke SEKS an der Mischung | C/S | Al₂O₃ |
| | (Gew.-%) | (Gew.-%) | (Gew.-%) |
| E1 | 0 | 1,10 | 11,4 |
| E2 | 3 | 1,15 | 12,3 |
| E3 | 6 | 1,18 | 12,8 |
| E4 | 10 | 1,23 | 13,7 |
| E5 | 20 | 1,39 | 14,8 |

**Tabelle 1b**

| (Hochofenschlacke HOS2) | | | |
|---|---|---|---|
| Schlacke | Anteil der Zuschlagschlacke SEKS an der Mischung | C/S | Al₂O₃ |
| | (Gew.%) | (Gew.%) | (Gew.%) |
| E6 | 0 | 1,17 | 11,8 |
| E7 | 3 | 1,20 | 12,4 |
| E8 | 6 | 1,23 | 13,3 |
| E9 | 10 | 1,29 | 13,6 |
| E10 | 20 | 1,40 | 15,3 |

Entsprechend der zugegebenen Menge an SEKS entstanden aus den Hochofenschlacken HOS1, HOS2 jeweils fünf Schlacken E1 bis E5 bzw. E6 bis E10. Die aus der Zugabe der sekundärmetallurgischen Schlacke SEKS zu den Hochofenschlacken HOS1 bzw. HOS2 resultierende Basizität C/S der nach der Zugabe in erfindungsgemäßer Weise dotierten Schlacken HOS1 bzw. HOS2 und deren jeweiliger Al₂O₃-Gehalt sind in den Tabellen 1a, 1b ebenfalls vermerkt.

Die derart konditionierten Schlacken E1 bis E10 wurden zu Hüttensand HSE granuliert, gemahlen und mit gemahlenem Klinker im Verhältnis 25 % Klinker und 75 % Hüttensand HSE vermischt. Der Mischung wurden 4,5 Gew.-% SO₃ als Anhydrid zugesetzt. Die erhaltenen Mischungen wurden jeweils auf eine Mahlfeinheit von 4200 cm²/g Blaine eingestellt. Aus den so erhaltenen Zementen ZE1 bis ZE10 wurden dann den geltenden Prüfnormen entsprechende Prüfkörper in Form von Mörtelprismen gefertigt.

Die Druckfestigkeiten der unterschiedlichen Mischungen zwei Tage (Spalte 2d), sieben Tage (Spalte 7d) und 28 Tage (Spalte 28d) nach Herstellung der Mörtelprismen sind für die aus den Schlacken E1 bis E10 gewonnenen Zemente ZE1 - ZE10 sowie für drei Normzemente ZV1 (Portlandzement CEM I/32,5 R), ZV2 (Hochofenzement CEM III/A 32,5 R) und ZV3 (Hochofenzement CEM III/B 42,5) in Tabelle 2 vermerkt.

**Tabelle 2**

| Zement | Druckfestigkeit (N/mm²) nach 2 (2d), 7 (7d) und 28 Tagen (28 d) | | |
|---|---|---|---|
| | 2d | 7d | 28d |
| ZE1 | 6,3 | 25,4 | 43,2 |
| ZE2 | 7,7 | 28,5 | 48,1 |
| ZE3 | 10,2 | 31,2 | 51,2 |
| ZE4 | 15,3 | 35,9 | 54,7 |
| ZE5 | 21,0 | 46,3 | 59,9 |
| ZE6 | 18,1 | 34,8 | 49,0 |
| ZE7 | 19,4 | 35,8 | 48,8 |
| ZE8 | 20,7 | 35,0 | 50,6 |
| ZE9 | 22,5 | 37,6 | 50,7 |
| ZE10 | 27,8 | 42,6 | 55,2 |
| ZV1 | 23,1 | 39,6 | 49,3 |
| ZV2 | 14,0 | 32,5 | 49,3 |
| ZV3 | 14,3 | 35,1 | 46,4 |

Es zeigt sich, dass diejenigen Prüfkörper, die aus den unter Verwendung von erfindungsgemäß erzeugtem Hüttensand hergestellten Zementen ZE2 bis ZE5 bzw. ZE7 bis ZE10 gefertigt worden sind, aufgrund der Zugabe des Zuschlagstoffes zu der jeweiligen Hochofenschlacke HOS1, HOS2 eine verbesserte Druckfestigkeit besitzen. Diese Festigkeiten überschreiten teilweise die Druckfestigkeiten von Prüfkörpern, die aus dem bekannten Portlandzement ZV1 der Klasse CEM I/32,5 R hergestellt worden sind.

Aus den Diagrammen 1 und 2 wird der positive Einfluss einer Aufdotierung der unterschiedlichen Hochofenschlacken HOS1, HOS2 durch einen CaO- und Al₂O₃-haltigen Stoff besonders deutlich. Dazu sind im Diag. 1 für die aus den Zementen ZE1 bis ZE5 und im Diag. 2 für die aus den Zementen ZE6 bis ZE10 hergestellten Prüfkörper die nach 2, 7 und 28 Tagen ermittelten Druckfestigkeiten graphisch über der Zugabemenge an sekundärmetallurgischer Schlacke SEKS aufgetragen.

Anhand weiterer Versuche sollte dann anhand von Laborversuchen demonstriert werden, wie durch Zugabe besonders ausgewählter Zuschlagstoffe Wärmeverluste ausgeglichen werden können. Dazu ist in verschiedenen Versuchen V1 bis V10 eine Hochofenschlacke HOS3 mit unterschiedlichen Mengen an Calciumcarbid CaC₂ dotiert worden. Die CaC₂-Zugabemengen sind aus dem jeweiligen Speicher als Kalk (CaO)- Calciumcarbid (CaC₂)-Gemisch über eine Lanze senkrecht oder unter einem Winkel von 45° in die Hochofenschlackenschmelze eingebracht worden. Als Fördermedium diente Stickstoff N₂, Druckluft DL oder Sauerstoff O₂. Im Einzelfall ist über eine senkrecht zur Schlackenoberfläche ausgerichtete Lanze zusätzlicher Sauerstoff O₂ aufgegeben worden.

In Tabelle 3 sind für die Versuche V1 bis V10 die wesentlichen Verfahrensparameter sowie die Temperaturen der Schlacke vor und nach der CaC₂-Zugabe aufgeführt.

**Tabelle 3**

| Versuch | Anteil CaC₂ | Lanzen-Ausrichtung | Fördermedium | Zugabezeit | Zugabe von O₂ | Temperaturen | | |
|---|---|---|---|---|---|---|---|---|
| | | | | | | Tv | Tn | ΔT |
| | [Gew.-%] | | | (s) | | [°C] | [°C] | [°C] |
| V 1 | 1 | senkrecht | N₂ | - | Nein | 1507 | 1512 | +5 |
| V 2 | 3 | senkrecht | N₂ | - | Nein | 1510 | 1516 | +6 |
| V 3 | 3 | 45° | N₂ | - | Nein | 1511 | 1521 | +10 |
| V 4 | 0 | 45° | O₂ | 60 | * | 1516 | 1525 | +9 |
| V 5 | 3 | 45° | DL | 20 | Nein | 1519 | 1534 | +15 |
| V 6 | 0 | 45° | O₂ | 30 | * | 1538 | 1553 | +15 |
| V 7 | 3 | 45° | O₂ | 20 | Nein | 1545 | - | - |
| V 8 | 3 | 45° | N₂ | 20 | JA | 1547 | 1569 | +22 |
| V 9 | 4,04 | 45° | N₂ | 28 | JA | 1658 | 1676 | +18 |
| V 10 | 4,04 | 45° | N₂ | 27 | JA | 1661 | 1677 | +16 |
| Tv = Temperatur vor Zugabe, | | | | | | | | |
| Tn = Temperatur nach Zugabe, | | | | | | | | |
| ΔT = Differenz Tn - Tv, | | | | | | | | |
| * = In diesen beiden Referenzversuchen wurde nur O₂ eingeblasen. | | | | | | | | |

Es ist deutlich zu erkennen, dass durch Zugabe von Kohlenstoffträgern wie Calciumcarbid CaC₂ einem Temperaturverlust der Schmelze und damit einer unerwünschten Erhöhung der Viskosität der Schlacke begegnet werden kann.

Nachdem im Labor gezeigt werden konnte, dass durch die Zugabe eines Kalk-Calciumcarbidgemischs zu einer flüssigen Hochofenschlacke eine Temperaturerhöhung in der Schlackenschmelze erreicht werden kann, wurde Hochofenschlacke mit Calciumcarbid (KCG) und zusätzlich mit zwei Referenzmaterialien KAS und SEKS konditioniert. Die so dotierte Hochofenschlacke (HOSA, HOSB) ist dann zu Hüttensanden HSA1, HSA2 und HSB granuliert worden.

Die Ausgangshochofenschlacke HOSA, welche vorwiegend aus CaO, SiO₂, MgO und Al₂O₃ besteht und eine Basizität CaO/SiO₂ von 1,14 aufweist, ist mit 6,71 Gew.-% eines Kalkaluminat-Schlackenbildners KAS, hauptsächlich bestehend aus CaO, MgO und Al₂O₃, versetzt worden (Versuch W 99).

Ferner wurde die gleiche HOS A mit 10,0 Gew.-% einer sekundärmetallurgischen Schlacke SEKS versetzt (Versuch W 100). Der Ausgangshochofenschlacke HOS B mit einer Basizität CaO/SiO₂ von 1,13 wurde 4,04 Gew.-% eines Kalk-Caiciumcarbidgemisches KCG beigemengt (Versuch W 101). Die chemischen Zusammensetzungen der einzelnen Komponenten und der daraus hergestellten Hüttensande sind in Tabelle 4 aufgeführt.

Die verschiedenen Mischungen wurden auf 4200 cm²/g Blaine aufgemahlen und mit einem Zementklinker im Verhältnis 3/1 und 4,5 Gew.-% Sulfat vermischt. Anschließend wurden aus dieser Zementmischung Mörtelprismen hergestellt. Die Ergebnisse der an den Mörtelprismen ermittelten Festigkeiten sind ebenfalls in Tabelle 4 dargestellt.

Deutlich ist der besonders positive Effekt der Zugabe von 4,04 Gew.-% des Kalk-Calciumcarbidgemisches KCG auf die "Anfangsfestigkeit" (2d) der Mischung nach 2 Tagen zu erkennen.

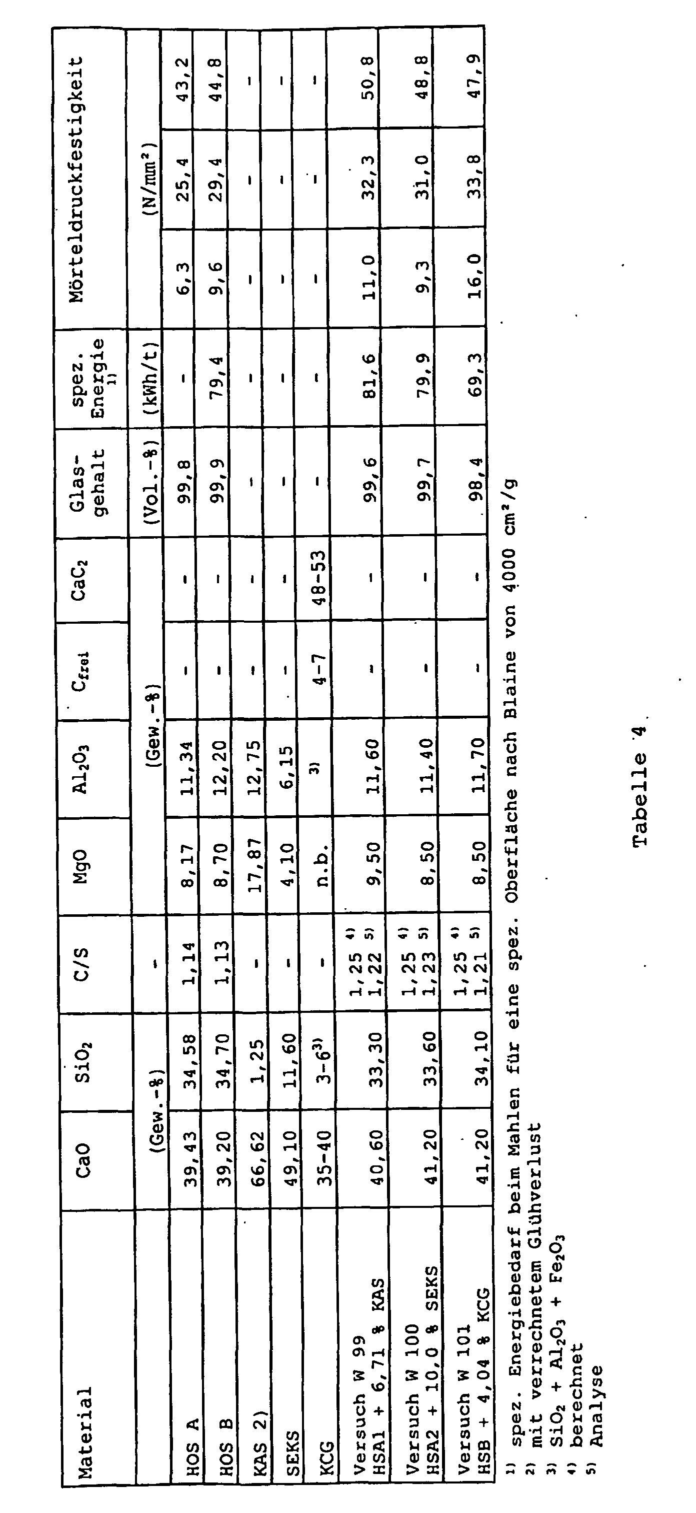

## Patentansprüche

1. Verfahren zur Konditionierung von flüssiger Hochofenschlacke, bei dem der flüssigen Hochofenschlacke nach ihrem Abstich aus dem Hochofen und vor ihrer Weiterverarbeitung ein Material zugegeben wird, welches mindestens einen Stoff aus der Gruppe CaO, MgO, Al₂O₃ enthält, **dadurch gekennzeichnet, dass** der flüssigen Hochofenschlacke zusätzlich mindestens ein exotherm reagierender Stoff vor dem Fuchs, im Fuchs oder nach dem Fuchs in der Schlackenrinne zugesetzt wird.

2. Verfahren nach Anspruch 1, **dadurch**
**gekennzeichnet, dass** das zugesetzte Material gebrannten Kalk, gebrannten Dolomit und/oder Tonerde enthält.

3. Verfahren nach einem der voranstehenden Ansprüche, **dadurch gekennzeichnet, dass** das zugesetzte Material gebrauchte Feuerfestmaterialien enthält.

4. Verfahren nach einem der voranstehenden Ansprüche, **dadurch gekennzeichnet, dass** das zugesetzte Material Schlacken und/oder Reststoffe aus der Aluminiumherstellung enthält.

5. Verfahren nach einem der voranstehenden Ansprüche, **dadurch gekennzeichnet, dass** das zugesetzte Material Bestandteile einer sekundärmetallurgischen Schlacke enthält.

6. Verfahren nach einem der voranstehenden Ansprüche, **dadurch gekennzeichnet, dass** das zugesetzte Material einen CaO-Gehalt von 35 - 60 Gew.-%, einen MgO-Gehalt von 10 - 20 Gew.-% und einen Al₂O₃-Gehalt von 15 - 40 Gew.-% aufweist.

7. Verfahren nach einem der voranstehenden Ansprüche, **dadurch gekennzeichnet, dass** die zugesetzten Materialien MgO enthalten und die MgO enthaltenden Materialien aus gebrauchten feuerfestem Material gewonnen sind.

8. Verfahren nach einem der voranstehenden Ansprüche, **dadurch gekennzeichnet, dass** das zugesetzte Material eine Mischung von mindestens zwei der in den voranstehenden Ansprüchen genannten Stoffe ist.

9. Verfahren nach einem der voranstehenden Ansprüche, **dadurch gekennzeichnet, dass** als exotherm reagierender Stoff Calciumcarbid (CaC₂) verwendet wird.

10. Verfahren nach einem der voranstehenden Ansprüche, **dadurch gekennzeichnet, dass** als exotherm reagierende Stoffe FeO-haltige Stäube verwendet werden.

11. Verfahren nach einem der voranstehenden Ansprüche, **dadurch gekennzeichnet, dass** als exotherm reagierender Stoff Aluminium verwendet wird.

12. Verfahren nach einem der voranstehenden Ansprüche, **dadurch gekennzeichnet, dass** als exotherm reagierende Stoffe eine Mischung von mindestens zwei der in den Ansprüchen 9 bis 11 angegebenen Stoffe verwendet werden.

13. Verfahren nach einem der voranstehenden Ansprüche, **dadurch gekennzeichnet, dass** die Korngröße der zugesetzten Stoffe 0 - 3 mm beträgt.

14. Verfahren nach einem der voranstehenden Ansprüche, **dadurch gekennzeichnet, dass** die Zuschlagstoffe manuell zugegeben werden.

15. Verfahren nach einem der voranstehenden Ansprüche, **dadurch gekennzeichnet, dass** die Zuschlagstoffe über eine Rutsche zugegeben werden.

16. Verfahren nach einem der Ansprüche 1 bis 14, **dadurch gekennzeichnet, dass** die Zusatzstoffe mittels einer Lanze in die flüssige Hochofenschlacke eingebracht werden.

17. Verfahren nach einem der Ansprüche 1 bis 14, **dadurch gekennzeichnet, dass** die Zusatzstoffe in der Schlackenrinne in die flüssige Hochofenschlacke eingebracht werden.

18. Verfahren nach einem der voranstehenden Ansprüche, **dadurch gekennzeichnet, dass** die Zufuhr der Zusatzstoffe durch ein Druckfluid unterstützt wird.

19. Verfahren nach Anspruch 18, **dadurch**
**gekennzeichnet, dass** als Druckfluid trockene Luft verwendet wird.

20. Verfahren nach Anspruch 18, **dadurch**
**gekennzeichnet, dass** als Druckfluid Stickstoff oder ein anderes weitgehend inertes Gas verwendet wird.

21. Verfahren nach Anspruch 18, **dadurch**
**gekennzeichnet, dass** als Druckfluid Sauerstoff oder ein Sauerstoff abgebendes Gas verwendet wird.

22. Verfahren nach Anspruch 18, **dadurch**
**gekennzeichnet, dass** als Druckfluid Kohlenmonoxid/Wasserstoff verwendet wird.

23. Verfahren nach einem der voranstehenden Ansprüche, **dadurch gekennzeichnet, dass** zusätzlich zu den Zuschlagstoffen Sauerstoff auf die flüssige Hochofenschlacke aufgegeben wird.

24. Verfahren nach einem der voranstehenden Ansprüche, **dadurch gekennzeichnet, dass** zusätzlich zu den Zuschlagstoffen Sauerstoff in die flüssige Hochofenschlacke eingebracht wird.

## Claims

1. Process for the conditioning of liquid blast furnace slag, wherein after being tapped from the blast furnace and before further processing a material is added to the liquid blast furnace slag, which contains at least one material selected from the group CaO, MgO, Al₂O₃, **characterized in that** additionally at least one exothermically reacting substance is added to the liquid blast furnace slag before the siphon, in the siphon or after the siphon in the slag runner.

2. Process according to Claim 1, **characterized in that** the added substance contains burnt lime, burnt dolomite and/or alumina.

3. Process according to any one of the preceding claims, **characterized in that** the added substance contains used refractory materials.

4. Process according to any one of the preceding claims, **characterized in that** the added substance contains slags and/or residues from the production of aluminium.

5. Process according to any one of the preceding claims, **characterized in that** the added substance contains constituents of a secondary metallurgical slag.

6. Process according to any one of the preceding claims, **characterized in that** the added substance has a CaO content of 35 - 60 weight %, an MgO content of 10 - 20 weight % and an Al₂O₃-content of 15 - 40 weight %.

7. Process according to any one of the preceding claims, **characterized in that** the added substances contain MgO and the MgO-containing materials are recycled from used refractory material.

8. Process according to any one of the preceding claims, **characterized in that** the added substance is a mixture of at least two of the substances specified in the preceding claims.

9. Process according to any one of the preceding claims, **characterized in that** calcium carbide (CaC₂) is used as exothermically reacting substance.

10. Process according to any one of the preceding claims, **characterized in that** FeO-containing dusts are used as exothermically reacting substances.

11. Process according to any one of the preceding claims, **characterized in that** aluminium is used as exothermically reacting substance.

12. Process according to any one of the preceding claims, **characterized in that** a mixture of at least two of the substances indicated in Claims 9 to 11 are used as exothermically reacting substances.

13. Process according to any one of the preceding claims, **characterized in that** the particle size of the added substances is 0 - 3 mm.

14. Process according to any one of the preceding claims, **characterized in that** the additives are added manually.

15. Process according to any one of the preceding claims, **characterized in that** the additives are added via a chute.

16. Process according to any one of Claims 1 to 14, **characterized in that** the additives are brought by means of a lance into the liquid blast furnace slag.

17. Process according to any one of Claims 1 to 14, **characterized in that** the additives are brought into the liquid blast furnace slag in the slag runner.

18. Process according to any one of the preceding claims, **characterized in that** the transport of the additives is assisted with pressure fluid.

19. Process according to Claim 18, **characterized in that** dry air is used as pressure fluid.

20. Process according to Claim 18, **characterized in that** nitrogen or another generally inert gas is used as pressure fluid.

21. Process according to Claim 18, **characterized in that** oxygen or an oxygen-releasing gas is used as pressure fluid.

22. Process according to Claim 18, **characterized in that** carbon monoxide/hydrogen is used as pressure fluid.

23. Process according to any one of the preceding claims, **characterized in that** in addition to the additives oxygen is blown onto the liquid blast furnace slag.

24. Process according to any one of the above claims, **characterized in that** in addition to the additives oxygen is injected into the liquid blast furnace slag.

## Revendications

1. Procédé de conditionnement de laitier liquide de haut-fourneau, dans lequel on ajoute au laitier liquide de haut-fourneau, après sa coulée hors du haut-fourneau et avant son traitement ultérieur, un matériau qui contient au moins une substance du groupe de CaO, MgO, Al₂O₃, **caractérisé en ce que** l'on ajoute en outre au laitier liquide de haut-fourneau, au moins une substance à réaction exothermique dans le canal à laitier, avant, dans ou après le séparateur de laitier.

2. Procédé selon la revendication 1, **caractérisé en ce que** le matériau ajouté contient de la chaux calcinée, de la dolomie calcinée et/ou de l'alumine.

3. Procédé selon l'une des revendications précédentes, **caractérisé en ce que** le matériau ajouté contient des matériaux réfractaires usagés.

4. Procédé selon l'une des revendications précédentes, **caractérisé en ce que** le matériau ajouté contient du laitier et/ou d'autres résidus de la production d'aluminium.

5. Procédé selon l'une des revendications précédentes, **caractérisé en ce que** le matériau ajouté contient des composants d'un laitier de métallurgie secondaire.

6. Procédé selon l'une des revendications précédentes, **caractérisé en ce que** le matériau ajouté contient une teneur en CaO de 35 - 60 % en poids, une teneur en MgO de 10 - 20 % en poids et une teneur en Al₂O₃ de 15 - 40 % en poids.

7. Procédé selon l'une des revendications précédentes, **caractérisé en ce que** les matériaux ajoutés contiennent MgO et les matériaux contenant MgO sont tirés de matériau réfractaire usagé.

8. Procédé selon l'une des revendications précédentes, **caractérisé en ce que** le matériau ajouté contient un mélange d'au moins deux des substances mentionnées dans les revendications précédentes.

9. Procédé selon l'une des revendications précédentes, **caractérisé en ce que** l'on utilise du carbure de calcium (CaC₂) comme substance à réaction exothermique.

10. Procédé selon l'une des revendications précédentes, **caractérisé en ce que** l'on utilise des poussières contenant du FeO comme substance à réaction exothermique.

11. Procédé selon l'une des revendications précédentes, **caractérisé en ce que** l'on utilise de l'aluminium comme substance à réaction exothermique.

12. Procédé selon l'une des revendications précédentes, **caractérisé en ce que** l'on utilise comme substance à réaction exothermique un mélange d'au moins deux des substances mentionnées dans les revendications 9 à 11.

13. Procédé selon l'une des revendications précédentes, **caractérisé en ce que** la granulométrie des substances ajoutées est de 0 - 3 mm.

14. Procédé selon l'une des revendications précédentes, **caractérisé en ce que** les substances additionnelles sont ajoutées à la main.

15. Procédé selon l'une des revendications précédentes, **caractérisé en ce que** les substances additionnelles sont amenées par un couloir de déversement.

16. Procédé selon l'une des revendications 1 à 14, **caractérisé en ce que** les substances additionnelles sont amenées au moyen d'une lance dans le laitier liquide de haut-fourneau.

17. Procédé selon l'une des revendications 1 à 14, **caractérisé en ce que** les substances additionnelles sont amenées dans le laitier liquide de haut-fourneau, dans le canal à laitier.

18. Procédé selon l'une des revendications précédentes, **caractérisé en ce que** l'apport des substances additionnelles est renforcé par un fluide sous pression.

19. Procédé selon la revendication 18, **caractérisé en ce que** l'on utilise de l'air séché comme fluide sous pression.

20. Procédé selon la revendication 18, **caractérisé en ce que** l'on utilise de l'azote ou un autre gaz sensiblement inerte comme fluide sous pression.

21. Procédé selon la revendication 18, **caractérisé en ce que** l'on utilise de l'oxygène ou un gaz libérant de l'oxygène comme fluide sous pression.

22. Procédé selon la revendication 18, **caractérisé en ce que** l'on utilise du monoxyde de carbone/hydrogène comme fluide sous pression.

23. Procédé selon l'une des revendications précédentes, **caractérisé en ce que** l'on ajoute au laitier liquide de haut-fourneau de l'oxygène en plus des substances additionnelles.

24. Procédé selon l'une des revendications précédentes, **caractérisé en ce que** l'on ajoute au laitier liquide de haut-fourneau de l'oxygène en plus des matières additionnelles.
